# FASCICULE DE BREVET EUROPEEN

(11) **EP 1 057 355 B1**
(45) Date de publication et mention de la délivrance du brevet: **02.01.2004**
(21) Numéro de dépôt: 99901635.5
(22) Date de dépôt: 27.01.1999
(51) Int. Cl.: H04Q 7/38, H04K 3/00

(54) **DISPOSITIF ET PROCEDE POUR DETECTER LA PRESENCE D'UN TELEPHONE CELLULAIRE DE TYPE GSM EN FONCTION OU TOUT AUTRE MOBILE**
VORRICHTUNG UND VERFAHREN ZUM NACHWEIS DER ANWESENHEIT EINES SICH IN BETRIEB BEFINDLICHEN ZELLULAREN GSM-TELEFONS ODER JEGLICHER ANDEREN MOBILEN GERÄTE
DEVICE AND METHOD FOR DETECTING THE PRESENCE OF AN OPERATING CELLULAR TELEPHONE OF THE GSM TYPE OR ANY OTHER MOBILE UNIT

(30) Priorité: 25.02.1998 FR 9802290
(43) Date de publication de la demande: 06.12.2000
(73) Titulaire: Longhi, Patrice, 94700 Maisons-Alfort (FR)
(72) Inventeur: Longhi, Patrice, 94700 Maisons-Alfort (FR)
(74) Mandataire: Breese, Pierre
(86) Numéro de dépôt international: PCT/FR1999/000158
(87) Numéro de publication internationale: WO 1999/044385

(56) Documents cités:
- WO-A-96/29687
- WO-A-97/26633
- US-A- 5 655 019

## Description

La présente invention concerne un dispositif et un procédé pour détecter la présence d'un téléphone cellulaire de type GSM en fonction ou tout autre mobile.

Il est connu que la présence d'un téléphone cellulaire GSM est de nature à perturber le fonctionnement de certains matériels et équipements, même lorsque ces téléphones sont en position de veille. En effet, ces téléphones cellulaires émettent périodiquement, notamment en réponse de signaux de service transmis par une balise émettrice réceptrice, des signaux HF pouvant interférer avec des réseaux informatiques.

Ces situations sont particulièrement perturbantes dans des lieux tels que des hôpitaux, des salles de conférences, ou encore dans des avions ou des engins de transports comportant des fonctions automatisées.

L'art antérieur connaît la demande internationale de brevet N° WO-A-96/29687 qui porte sur un équipement de détection de téléphones cellulaires, ainsi que le brevet américain N° US-A-5 655 019 qui porte sur un système permettant d'empêcher des appels téléphoniques dans un système radio-cellulaire.

L'objet de la présente invention est de proposer un équipement et un procédé pour détecter la présence de téléphones cellulaires en fonctionnement. À cet effet, l'invention concerne tout d'abord un équipement comportant au moins un circuit de réception, un micro-calculateur et un moyen de mémoire, le micro-calculateur étant commandé pour identifier au moins un code de service émis par un téléphone cellulaire, et pour activer un signal d'alerte en cas de détection d'un tel signal de service.

Selon une variante préférée, le micro-calculateur est programmé pour détecter un premier type de code de service émis par un téléphone cellulaire lorsqu'il est interrogé par une balise BTS, et pour détecter un deuxième type de signaux de service lorsque le téléphone cellulaire émet ou reçoit en mode de conversation.

Avantageusement, l'équipement active un signal lumineux en cas de détection d'un code de service.

Selon une variante, l'équipement émet un signal continu ou discontinu lorsqu'il détecte un tel signal.

Selon une variante préférée, l'équipement comporte un émetteur de brouillage activé par le détecteur de code de service.

De préférence il comporte un émetteur de brouillage activé par le détecteur de code de service et un moyen pour interrompre l'émission au bout d'une durée prédéterminée.

Selon une variante avantageuse, la sensibilité du récepteur est limitée pour réduire la portée à comprise entre 10 et 30 de mètres, et des moyens de brouillage dont la puissance est limitée à une portée sensiblement égale à la portée de détection.

L'invention concerne également un procédé pour l'alerte en cas d'utilisation intempestive d'un appareil de téléphonie cellulaire dans un périmètre protégé, le procédé consistant à disposer un récepteur accordé sur la bande de fréquences utilisée pour la téléphonie cellulaire dans le lieu à protéger, à traiter les signaux numériques délivrés par le circuit de réception par un micro-calculateur commandé pour détecter les signaux de service utilisés par le système de téléphonie cellulaire et pour activer une alarme en cas de détection d'un tel signal de service.

L'invention sera mieux comprise à la lecture de la description qui suit se référant à un exemple non limitatif de réalisations en relation avec les dessins annexés où :

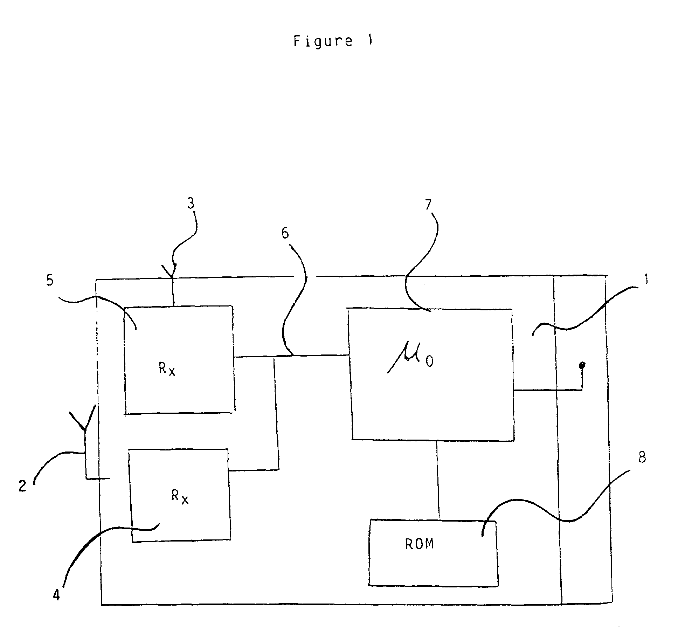

la figure 1 représente le schéma de principe d'un tel équipement.

Le dispositif selon l'invention est réalisé sous la forme d'un boîtier (1) muni d'une antenne (2), et éventuellement d'une antenne additionnelle (3) qui peut être interne ou externe. Là où les antennes additionnelles sont destinées à permettre la détection sur différents réseaux de téléphonie cellulaire. Ce boîtier est destiné à être déposé dans le lieu à protéger, par exemple dans une salle d'opération, un bloc opératoire, dans un site industriel dans lequel sont utilisés des appareils sensibles aux fréquences électromagnétiques, dans un avion, dans une salle de conférences ou une salle de réunions etc... .

Le boîtier comporte un circuit électronique comprenant un étage de réception principal (4) ainsi que des étages de réception additionnels (5) pour la détection sur des réseaux de téléphonie cellulaire additionnelle. Ces étages de réception sont des circuits électroniques connus dans l'état de la technique, par exemple des circuits de réception utilisés habituellement pour la téléphonie cellulaire. La sortie numérique (6) de ces étages de réception est reliée à un micro-processeur (7) assurant le traitement des signaux.

Le traitement des signaux consiste à vérifier la présence d'un signal numérique et à comparer ce signal numérique avec des séquences de signaux mémorisés dans une mémoire (8) contenant les codes de service correspondant aux phases de fonctionnement de l'équipement cellulaire.

Ces codes de service sont par exemple les codes IMSI ou IMEI correspondant respectivement aux codes d'identification de l'utilisateur et au code spécifique de l'appareil. Ces codes IMSI et IMEI sont émis par le téléphone cellulaire au moment de l'allumage et au moment de l'extinction.

D'autres codes de service peuvent être mémorisés dans la mémoire (8). Il s'agit par exemple des codes émis périodiquement par le téléphone cellulaire en réponse à un signal d'interrogation émis par la ou les BTS les plus proches du lieu d'utilisation du téléphone cellulaire. En cas de détection de ces codes, le micro-calculateur (7) émet des signaux d'alerte à des moyens d'alarme. Ces moyens d'alarme peuvent être des voyants lumineux, par exemple des diodes électroluminescentes, ou encore des signaux sonores tels qu'un buzzeur ou un générateur de fréquences relié à un haut parleur.

L'équipement peut comporter optionnellement un émetteur de faible puissance, par exemple de 300 mW, produisant une émission de brouillage en cas de détection d'un signal de service tel que le code IMSI ou IMEI. L'émission est maintenue pendant une durée prédéterminée, par exemple environ 30 secondes après la détection du signal de service. Elle est ensuite automatiquement interrompue.

La portée du récepteur et de l'émetteur sont limités par construction à un rayon compris entre 10 et 30 mètres.

Les signaux d'alerte peuvent être de différentes natures. Un premier signal d'alarme, par exemple sous la forme de l'allumage d'une diode électroluminescente verte et/ou de l'émission d'un son intermittent, peut correspondre à la détection des codes de service correspondants à l'allumage ou à l'extinction du téléphone cellulaire dans le périmètre de détection de l'équipement, ou encore à l'émission du signal de présence émis en réponse à l'envoi de la vitesse d'une interrogation.

Une deuxième série de signaux d'alarme, par exemple l'allumage d'une diode électroluminescente rouge et/ou l'émission d'un son continu peut correspondre à la détection de signaux correspondants au fonctionnement d'un téléphone cellulaire en appel ou en réception.

Il est avantageux de prévoir un moyen de contrôle de la sensibilité du récepteur de façon à permettre un contrôle du périmètre de détection de l'équipement. Ceci permet d'éviter un disfonctionnement dû à la détection de signaux provenant de téléphones cellulaire en dehors de la zone à protéger.

L'invention est décrite dans ce qui précède à titre d'exemple non limitatif. Il est bien évident que l'homme du métier pourra réaliser différentes variantes sans pour autant sortir du cadre de l'invention.

## Revendications

1. Équipement de détection de téléphone cellulaire dans une zone protégée **caractérisé en ce qu'**il comporte au moins un circuit de réception HF dont la sortie est reliée à un micro calculateur commandé de façon à détecter au moins un code de service représentatif du fonctionnement d'un équipement de téléphonie cellulaire et pour émettre un signal d'alarme en cas de détection d'un tel code de service.

2. Équipement selon la revendication 1 **caractérisé en ce qu'**il comporte une pluralité de circuits de réception, accordés chacun sur la fréquence de fonctionnement d'un réseau de téléphonie cellulaire.

3. Équipement selon l'une quelconque des revendications précédentes **caractérisé en ce que** le micro calculateur est commandé pour détecter des codes IMSI ou IMEI.

4. Équipement selon l'une quelconque des revendications précédentes **caractérisé en ce que** le micro calculateur est apte à détecter une première série de codes de services et à activer en cas de détection une première série de signaux d'alarme, et pour détecter une seconde série de codes de service et à activer dans ce cas une seconde série de signaux d'alarmes.

5. Équipement selon l'une quelconque des revendications précédentes **caractérisé en ce que** le micro calculateur est commandé pour activer une première série de signaux d'alarme en cas de détection du code de service correspondant à l'allumage, à l'extinction et/ou à l'émission d'un signal de présence par le téléphone cellulaire, et pour activer une deuxième série de signaux d'alarme en cas de détection du fonctionnement du téléphone cellulaire en émission ou en réception.

6. Équipement selon la revendication 1 **caractérisé en ce qu'**il comporte un émetteur de brouillage activé par le détecteur de code de service.

7. Équipement selon la revendication 6 **caractérisé en ce qu'**il comporte un émetteur de brouillage activé par le détecteur de code de service et un moyen pour interrompre l'émission au bout d'une durée prédéterminée.

8. Équipement selon la revendication 1 **caractérisé en ce que** la sensibilité du récepteur est limitée pour réduire la portée à comprise entre 10 et 30 de mètres, et des moyens de brouillage dont la puissance est limitée à une portée sensiblement égale à la portée de détection.

9. Procédé de détection d'un équipement de téléphonie cellulaire dans un périmètre à protéger **caractérisé en ce que** l'on détecte les signaux HF dans les bandes de fréquences utilisées pour la téléphonie cellulaire, et **en ce que** l'on analyse les signaux détectés afin d'activer un signal d'alarme en cas de détection d'un code de service représentatif du fonctionnement d'un téléphone cellulaire.

10. Procédé selon la revendication précédente **caractérisé en ce que** l'on détecte une première série de signaux de service correspondant à l'allumage, à l'émission d'un signal de présence et/ou à l'extinction d'un téléphone cellulaire, et à une deuxième série de signaux de service correspondant au fonctionnement en activité du téléphone cellulaire.

## Patentansprüche

1. Ausrüstung zur Ortung von Mobiltelefonen in einem geschützten Bereich, **dadurch gekennzeichnet, dass** sie mindestens eine Empfangsschaltung HF umfasst, deren Ausgang mit einem Mikrorechner verbunden ist, welcher so gesteuert ist, dass er mindestens einen Dienstkode des Betriebs einer Mobiltelefonausrüstung ortet und um bei Ortung eines solchen Dienstkodes ein Warnsignal auszusenden.

2. Ausrüstung nach Anspruch 1, **dadurch gekennzeichnet, dass** sie eine Mehrzahl von Empfangsschaltungen umfasst, welche jeweils auf die Betriebsfrequenz eines Mobiltelefonnetzes abgestimmt sind.

3. Ausrüstung nach einem der vorangehenden Ansprüche, **dadurch gekennzeichnet, dass** der Mikrorechner zur Ortung der IMSI oder IMEI Kode gesteuert ist.

4. Ausrüstung nach einem der vorangehenden Ansprüche, **dadurch gekennzeichnet, dass** der Mikrorechner geeignet ist, eine erste Serie von Dienstkoden und bei Ortung, eine erste Serie von Warnsignalen zu aktivieren und um eine zweite Serie von Dienstkoden zu orten und in diesem Fall, eine zweite Serie von Warnsignalen zu aktivieren.

5. Ausrüstung nach einem der vorangehenden Ansprüche, **dadurch gekennzeichnet, dass** der Mikrorechner gesteuert ist, um bei Ortung des Ein-, Ausstellens und/oder Aussendens eines Anwesenheitssignals durch das Mobiltelefon eine erste Serie von Warnsignalen zu aktivieren und um bei Ortung des Betriebs des aussendenden oder empfangenden Mobiltelefons eine zweite Serie von Warnsignalen zu aktivieren.

6. Ausrüstung nach Anspruch 1, **dadurch gekennzeichnet, dass** sie einen Störungssender umfasst, der von dem Dienstkode-Orter aktiviert wird.

7. Ausrüstung nach Anspruch 6, **dadurch gekennzeichnet, dass** sie einen Störungssender, der von dem Dienstkode-Orter aktiviert wird, und ein Mittel zur Unterbrechung des Sendens nach Ablauf einer vorbestimmten Zeitdauer umfasst.

8. Ausrüstung nach Anspruch 1, **dadurch gekennzeichnet, dass** die Empfindlichkeit des Empfängers begrenzt ist, um die Reichweite auf zwischen 10 und 30 Meter zu verringern, und Störmittel, deren Leistung auf eine Reichweite, die wesentlich der Ortungsreichweite entspricht, begrenzt ist.

9. Verfahren zur Ortung einer Mobiltelefonausstattung in einem zu schützenden Umkreis, **dadurch gekennzeichnet, dass** man die HF Signale in den für Mobiltelefone benutzten Frequenzbändern ortet und dass man die georteten Signale analysiert, um bei Ortung eines den Betrieb eines Mobiltelefons darstellenden Dienstkodes ein Warnsignal zu aktivieren.

10. Verfahren nach dem vorangehenden Anspruch, **dadurch gekennzeichnet, dass** man eine erste Serie von Dienstsignalen ortet, welche das Einstellen, das Aussenden eines Anwesenheitssignals und/oder dem Ausstellen eines Mobiltelefons entsprechen, und eine zweite Serie von Dienstsignalen, welche dem Betrieb des Mobiltelefons entsprechen.

## Claims

1. Equipment for detecting a cellular phone in a protected zone **characterised in that** it comprises at least one HF protection receiving circuit whose output is connected to a micro-computer commanded so that it detects at least one service code representative of the operation of a cellular telephone unit and to emit an alarm signal in the event of such a service code being detected.

2. Equipment of claim 1, **characterised in that** it comprises a number of reception circuits each tuned to the frequency of a cellular telephone network.

3. Equipment of any of the previous claims, **characterised in that** the micro-computer is commanded so that it detects IMSI or IMEI codes.

4. Equipment of any of the previous claims, **characterised in that** the micro-computer is capable of detecting a first series of service codes and of activating, in the event of detection, a first series of alarm signals, and of detecting a second series of service codes and of activating, in this case, a second series of alarm signals.

5. Equipment of any of the previous claims, **characterised in that** the micro-computer is commanded to activate a first series of alarm signals in the event of the service code corresponding to the switching on, off and/or transmission of a presence signal by the cellular telephone, and to activate a second series of alarm signals in the event of the cellular telephone being detected transmitting or receiving.

6. Equipment of claim 1, **characterised in that** it comprises a scrambling transmitter activated by the service code detector.

7. Equipment of claim 6, **characterised in that** it comprises a scrambling transmitter activated by the service code detector and a means for interrupting the transmission at the end of a predetermined period.

8. Equipment of claim 1, **characterised in that** the sensitivity of the receiver is limited to reduce its range to between 10 and 30 metres, and scrambling means whose power is limited to a range more or less equal to the detection range.

9. Detection process for a cellular telephone in a perimeter to be protected, **characterised in that** HF signals are detected in frequency bands used for cellular telephony, and **in that** the signals detected are analysed in order to activate an alarm signal in the event of a service code being detected that is representative of the operation of a cellular telephone.

10. Process of the previous claim, **characterised in that** a first series of signals is detected corresponding to the switching on, the transmission of a presence signal and/or the switching off of a cellular telephone, and to a second series of service signals corresponding to the operation of the cellular telephone.
